# EUROPEAN PATENT APPLICATION

(11) **EP 4 682 982 A1**
(43) Date of publication of application: **21.01.2026**
(21) Application number: 25189378.0
(22) Date of filing: 14.07.2025
(51) Int. Cl.: H01M 4/36, H01M 4/38, H01M 4/525, H01M 4/62, H01M 10/052, H01M 10/0562, H01M 4/02

(54) **LITHIUM SECONDARY BATTERY**

(30) Priority: 15.07.2024 KR 20240093359
(71) Applicant: SK On Co., Ltd., Seoul 03161 (KR)
(72) Inventor: PARK, Seong Jin, 34124 Daejeon (KR); CHO, Yun Sun, 34124 Daejeon (KR)
(74) Representative: Prüfer & Partner mbB Patentanwälte · Rechtsanwälte

(57) **Abstract**

A lithium secondary battery according to the embodiments of the present disclosure includes a cathode which includes lithium-metal oxide particles having a compressive fracture strength of 1,500 MPa or more and having a single particle form; an anode disposed opposite to the cathode and including a lithium metal layer; and a solid electrolyte layer interposed between the cathode and the anode and including a sulfide-based solid electrolyte.

## Description

### [BACKGROUND OF THE INVENTION]

### 1. Field of the Invention

The embodiments of the present disclosure relate generally to secondary battery technology and more particularly to lithium secondary battery technology.

### 2. Description of the Related Art

A secondary battery is a rechargeable battery that can be repeatedly charged and discharged many times during the useful life of the battery. With rapid progress of information and communication technology and display industries, the secondary battery has been widely applied as a power source to various portable electronic telecommunication devices such as camcorders, mobile phones, laptop computers, etc. Recently, a battery pack including a plurality of secondary batteries has also been developed and applied as a power source for eco-friendly electric or hybrid vehicles.

Examples of the secondary battery may include a lithium secondary battery, a nickelcadmium battery, a nickel-hydrogen battery and the like. Among them, the lithium secondary battery has a high operating voltage and a high energy density per unit weight, making it advantageous in terms of charging speed and lightweight design, such that development thereof is progressing in this regard.

Typically, a secondary battery may be manufactured by accommodating an electrode assembly inside a case. The electrode assembly may be fabricated by interposing a separator between a cathode and an anode. Also, a liquid electrolyte may be injected into the case to impregnate the cathode and the anode.

Alternatively, the secondary battery may use a solid electrolyte instead of a liquid electrolyte. In this case, the electrode assembly may include a cathode, an anode, and a solid electrolyte layer disposed between the cathode and the anode.

The solid electrolyte may serve as an electrolyte that physically separates the cathode and the anode while allowing lithium ions to migrate. Accordingly, the solid electrolyte may perform the role of a separator and an electrolyte, and may be more stable than the liquid electrolyte which has a high risk of explosion due to ignition.

### [SUMMARY OF THE INVENTION]

Embodiments of the present disclosure provide a lithium secondary battery exhibiting improved mechanical properties.

A lithium secondary battery according to some embodiments of the present disclosure includes a cathode which includes lithium-metal oxide particles having a compressive fracture strength of 1,500 MPa or more and having a single particle form; an anode disposed opposite to the cathode and including a metal layer comprising of lithium; and a solid electrolyte layer interposed between the cathode and the anode and including a sulfide-based solid electrolyte.

According to some embodiments, the compressive fracture strength of the lithium-metal oxide particles may be 1,600 MPa or more and 3,000 MPa or less.

According to some embodiments, the lithium-metal oxide particles may include nickel, cobalt and manganese.

According to some embodiments, the content of nickel based on the total number of moles of elements excluding lithium and oxygen in the lithium-metal oxide particles may be 60 mol% or more and less than 100 mol%.

According to some embodiments, the lithium-metal oxide particles may include a layered structure represented by Formula 1 below.

Formula 1 LiₓNiₐM1_{b1}M2_{b2}O_{2+y}

In Formula 1, M1 includes at least one of Co, Mn and Al, and M2 includes at least one of Na, Mg, Ca, Y, Ti, Hf, V, Nb, Ta, Cr, Mo, W, Fe, Cu, Ag, Zn, B, Ga, C, Si, Sn, Sr, Ba, Ra, P and Zr, and x, a, b1, b2 and z satisfy 0.9≤x≤1.2, 0.6≤a<1, 0<b1+b2≤0.4, -0.5≤y≤0.1.

According to some embodiments, the lithium-metal oxide particles may have a median particle diameter (D50) of 1 µm to 10 µm.

According to some embodiments, the anode may be composed of a metal layer consisting of lithium.

According to some embodiments, the sulfide-based solid electrolyte may include a compound represented by Formula 2 below.

Formula 2 Li_{c}Y_{d}PₑS_{f}Z_{g}

In Formula 2, Y includes at least one of B, Al, Ga, In, Si, Ge, Sn, Pb, As, Sb, Bi, Ti, V, Cr, Mn, Fe, Co, Ni, Cu, Y, Zr, Nb, Mo, Tc, Ru, Rh, Pd, Ag, Hf, Ta and W, and Z includes at least one of F, Cl, Br, I and O, and c, d, e, f and g satisfy 0 < c < 12, 0≤d≤6, 0≤e≤6, 0≤f≤12, 0≤g≤9.

According to some embodiments, the sulfide-based solid electrolyte may include at least one selected from the group consisting of Li₂S-P₂S₅, Li₂S-P₂S₅-LiCl, Li₂S-P₂S₅-LiBr, Li₂S-P₂S₅-LiCl-LiBr, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are positive numbers, Z is Ge, Zn or Ga), Li₂S-GeS₂, Li₂S-SiS₂-Li₃PO₄, Li₂S-SiS₂-LiₚMO_{q}, (p and q are positive numbers, M is P, Si, Ge, B, Al, Ga or In) and combinations thereof.

According to some embodiments, the solid electrolyte layer may have a thickness of 10 µm to 100 µm.

According to some embodiments, the cathode may include a cathode current collector and a cathode active material layer disposed on at least one surface of the cathode current collector, and the cathode active material layer may include the lithium-metal oxide particles and the sulfide-based solid electrolyte.

According to some embodiments, the lithium secondary battery may include a plurality of the electrode structures, wherein each electrode structure may be defined by the cathode, the anode and the solid electrolyte layer.

The lithium secondary battery according to the present disclosure includes a case and at least one lithium secondary battery embedded in the case.

An electrode assembly for a secondary battery, electrode assembly according to some embodiments of the present disclosure comprises: a cathode, an anode, and a solid electrolyte separating the cathode and anode, wherein the cathode comprises lithium-metal oxide particles having a compressive fracture strength of 1,500 MPa or more and having a single particle form; wherein the anode comprises a lithium metal layer; and wherein the solid electrolyte layer comprises a sulfide-based solid electrolyte.

According to some embodiments, the lithium-metal oxide particles have a compressive fracture strength of 1,600 MPa or more and 3,000 MPa or less as measured by applying a load to individual lithium-metal oxide particles using a powder resistance measuring device, and determining the maximum compressive stress prior to particle fracture based on a stress-strain curve obtained at a displacement rate of 10 nm/s or 100 nm/s, wherein the data is corrected by considering the spring stiffness, frame compliance, substrate compliance, and tip compliance.

According to some embodiments, the lithium-metal oxide particles include a layered structure represented by Formula 1 below:

Formula 1 LiₓNiₐM1_{b1}M2_{b2}O_{2+y}

wherein in Formula 1, M1 comprises at least one of Co, Mn and Al, and M2 comprises at least one of Na, Mg, Ca, Y, Ti, Hf, V, Nb, Ta, Cr, Mo, W, Fe, Cu, Ag, Zn, B, Ga, C, Si, Sn, Sr, Ba, Ra, P and Zr, and
x, a, b1, b2 and z satisfy 0.9≤x≤1.2, 0.6≤a<1, 0<b1+b2≤0.4, -0.5≤y≤0.1.
wherein the sulfide-based solid electrolyte comprises a compound represented by Formula 2 below:

Formula 2 Li_{c}Y_{d}PₑS_{f}Z_{g}

(in Formula 2, Y comprises at least one of B, Al, Ga, In, Si, Ge, Sn, Pb, As, Sb, Bi, Ti, V, Cr, Mn, Fe, Co, Ni, Cu, Y, Zr, Nb, Mo, Tc, Ru, Rh, Pd, Ag, Hf, Ta and W, and Z comprises at least one of F, Cl, Br, I and O, and
c, d, e, f and g satisfy 0 < c < 12, 0≤d≤6, 0≤e≤6, 0≤f≤12, 0≤g≤9), and
wherein the sulfide-based solid electrolyte comprises at least one selected from the group consisting of Li₂S-P₂S₅, Li₂S-P₂S₅-LiCl, Li₂S-P₂S₅-LiBr, Li₂S-P₂S₅-LiCl-LiBr, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ where m and n are positive numbers, and Z is Ge, Zn or Ga, Li₂S-GeS₂, Li₂S-SiS₂-Li₃PO₄, Li₂S-SiS₂-LiₚMO_{q} where p and q are positive numbers, and M is P, Si, Ge, B, Al, Ga or In, and combinations thereof.

The lithium secondary battery according to some embodiments of the present disclosure may not cause cracks in the cathode even if the volume of the battery increases due to lithium deposition during repeated charge and discharge cycles. Accordingly, the voltage drop phenomenon of the battery that occurs during the charging process may be alleviated.

According to some embodiments of the present disclosure, the durability of the electrode may be improved, thereby enhancing the cycle life characteristics of the lithium secondary battery.

The lithium secondary battery according to some embodiments of the present disclosure may have improved charge and discharge speeds and capacities.

The lithium secondary battery of the present disclosure may be widely applied in green technology fields, such as electric vehicles, battery charging stations, as well as solar power generation, wind power generation, and the like, which use the batteries. In addition, the lithium secondary battery of the present disclosure may be used in eco-friendly electric vehicles, hybrid vehicles, and the like, which are aimed at mitigating climate change by reducing air pollution and greenhouse gas emission.

### [BRIEF DESCRIPTION OF THE DRAWINGS]

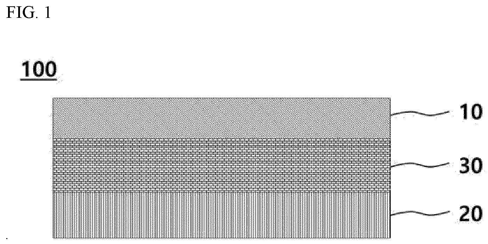

FIG. 1 is a schematic cross-sectional view illustrating a lithium secondary battery according to some embodiments of the present disclosure.

### [DETAILED DESCRIPTION OF THE INVENTION]

A lithium secondary battery according to some embodiment of the present disclosure may include a cathode having a compressive fracture strength of 1,500 MPa or more and including lithium-metal oxide particles in a single particle form; an anode including a lithium metal layer; and a solid electrolyte layer including a sulfide-based solid electrolyte.

Hereinafter, embodiments of the present disclosure will be described in detail with reference to the accompanying drawings. However, these embodiments are merely provided as examples, therefore, the embodiments of the present disclosure are not limited to the specific embodiments described as examples.

FIG. 1 is a schematic cross-sectional view illustrating a lithium secondary battery according to some embodiments of the present disclosure. In FIG. 1, for convenience of description, only a single electrode structure including a cathode 10, an anode 20, and a solid electrolyte layer 30 is shown, with the solid electrode layer 30 disposed between the cathode 10 and the anode 20. According to some embodiments, a plurality of electrode structures may be repeatedly stacked to form an electrode assembly, and the electrode assembly may be accommodated in a case to define a lithium secondary battery (or a battery cell). The shape of the electrode structure and the stacking arrangement of the electrode assembly may be variously modified within the spirit and scope of the present disclosure.

Referring to FIG. 1, a lithium secondary battery 100 (hereinafter, also referred to as an electrode structure) includes the cathode 10, the anode 20 disposed opposite to the cathode 10, and the solid electrolyte layer 30 interposed between the cathode 10 and the anode 20.

The cathode 10 may include a cathode current collector and a cathode active material layer disposed on at least one surface of the cathode current collector. The cathode active material layer includes a cathode active material, and may further include a conductive material, a binder, a solid electrolyte, and the like.

The cathode active material may include a lithium-metal oxide, and the lithium-metal oxide may have a compressive fracture strength of 1,500 MPa or more. In some embodiments, the compressive fracture strength of the lithium-metal oxide may be 1,600 MPa or more.

As described below, the anode 20 may include a lithium metal layer. In this case, as the lithium secondary battery undergoes repeated charge and discharge cycles, lithium is deposited on the surface of the anode 20, thereby resulting in an increase in the volume of the battery. Accordingly, there is a problem in that pressure may be applied to the cathode 10 inside the battery, which is a closed system, and the cathode active material of the cathode 10 may be damaged by cracks. The term 'lithium secondary battery' may refer to, for example, a lithium metal battery.

The lithium secondary battery according to some embodiments may include lithium-metal oxide particles having a compressive fracture strength of 1,500 MPa or more, thereby exhibiting high durability of the cathode active material. Accordingly, even when the volume of a lithium secondary battery including a lithium metal anode expands due to repeated charging and discharging, damage to the cathode active material may be reduced. In addition, cracks in the cathode active material may be suppressed, thereby preventing performance degradation due to decreased contact after repeated charging and discharging of the lithium secondary battery.

In some embodiments, the upper limit of the compressive fracture strength of the lithium-metal oxide is not particularly limited, but may be 3,000 MPa or less.

According to some embodiments, the lithium-metal oxide particles may include nickel, cobalt and/or manganese. In some embodiments, the lithium-metal oxide particles may include nickel, cobalt and manganese. In this case, the lithium-metal oxide particles may include an NCM-based lithium-metal oxide.

In some embodiments, the content of nickel based on the total number of moles of elements excluding lithium and oxygen of the lithium-metal oxide particle may be 60 mol% or more and less than 100 mol%. In some embodiments, the content of nickel based on the total number of moles of elements excluding lithium and oxygen in the lithium-metal oxide particles may be 65 mol% or more, 70 mol% or more, 75 mol% or more, or 80 mol% or more, and 99 mol% or less, 95 mol% or less, or 90 mol% or less.

Nickel may be provided as a transition metal associated with the output and capacity of the lithium secondary battery. Therefore, as described above, by employing a high-nickel-content (high-Ni) composition in the cathode active material, a high-capacity cathode and a high-capacity lithium secondary battery may be provided.

However, as the content of nickel increases, the long-term storage stability and cycle life stability of the cathode, the secondary battery, or both, may decrease relatively, and the possibility of side reactions with the electrolyte may also increase. However, the lithium-metal oxide particles according to some embodiments may include cobalt to have high electrical conductivity, and may further include manganese to improve cycle life stability and capacity retention characteristics.

The content of Ni (e.g., the mole fraction of nickel based on the total number of moles of nickel, cobalt and manganese) in the NCM-based lithium oxide may be 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

According to some embodiments, the lithium-metal oxide particles may include a layered structure represented by Formula 1 below.

Formula 1 LiₓNiₐM1_{b1}M2_{b2}O_{2+z}

In Formula 1, M1 includes at least one of Co, Mn and Al, and M2 includes at least one of Na, Mg, Ca, Y, Ti, Hf, V, Nb, Ta, Cr, Mo, W, Fe, Cu, Ag, Zn, B, Ga, C, Si, Sn, Sr, Ba, Ra, P and Zr, and x, a, b1, b2 and z satisfy 0.9≤x≤1.2, 0.6≤a<1, 0<b1+b2≤0.4, -0.5≤z≤0.1.

The chemical structure represented by Formula 1 indicates a bonding relationship between elements included in the layered structure or crystal structure of the cathode active material, and does not exclude other additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing the introduction and substitution of the additional elements.

The cathode active material may further include one or more auxiliary elements (e.g., M2 in Formula 1) which are added to the main active elements, in order to enhance chemical stability thereof or the layered structure/crystal structure. The one or more auxiliary elements may be incorporated into the layered structure/crystal structure together with the main active elements to form a bond, and it should be understood that this case is also included within the chemical structure range represented by Formula 1.

The one or more auxiliary elements may be used as a coating element or a doping element for the lithium-metal oxide particles. For example, the one or more auxiliary elements may be present on the surface of the lithium-metal oxide particles, or may penetrate through the surface of the lithium-metal oxide particles to become incorporated into the bonding structure represented by Formula 1 above.

The lithium-metal oxide particles may have a single particle form morphologically. The term "single particle form" as used herein is meant to exclude, for example, a secondary particle formed by aggregating a plurality of primary particles (e.g., more than 10) into substantially a single particle. For example, the lithium-metal oxide particles may be composed of particles in a substantially single particle form, and a secondary particle structure in which the primary particles are assembled or aggregated may be excluded.

Since the lithium-metal oxide particles have a single particle form, the mechanical durability may be higher than that of the secondary particle form, and their compressive fracture strength may be high as described above. The single-particle lithium-metal oxide offers superior mechanical integrity compared to a secondary (aggregated) counterpart. Because of the enhanced compressive fracture strength the single-particle lithium-metal oxide can minimize microcracking and structural breakdown during the stress of repeated charging cycles, which is a key cause of performance degradation in batteries. So, by holding up better under stress, single-particle cathode materials can extend the battery's lifespan and improve its overall cycling performance. Accordingly, performance degradation during repeated charging and discharging of the lithium secondary battery may be alleviated.

According to some embodiments, the lithium-metal oxide particles may have a crystallographically single crystal structure. For example, the lithium-metal oxide particles may have a single crystal structure, in which each particle includes a single crystal grain.

According to some embodiments, the lithium-metal oxide particles may have a median particle diameter (D50) of 1 µm to 10 µm. According to some embodiments, the lithium-metal oxide particles may have a median particle diameter (D50) of 2 µm to 5 µm.

The term "median particle diameter (D50)" as used herein refers to an average particle diameter of a plurality of particles, and D50 may be the median particle diameter obtained at a point corresponding to 50% of the cumulative volume distribution of the prepared active material particles.

The method for measuring the cumulative volume distribution of the particles is not particularly limited, but may be measured using a laser diffraction particle size analyzer. For example, a Malvern 3000 device may be used in accordance with ASTM B822.

In some embodiments, the amount of the lithium-metal oxide particles based on the total weight of the cathode active material may be 50% by weight ("wt%") or more. For example, the amount of the lithium-metal oxide particles based on the total weight of the cathode active material may be 60 wt% or more, 70 wt% or more, 80 wt% or more, or 90 wt% or more.

In some embodiments, the cathode active material may further include a lithium cobalt oxide-based active material, a lithium manganese oxide-based active material, a lithium nickel oxide-based active material, or a lithium iron phosphate (LFP)-based active material (e.g., LiFePO₄).

In some embodiments, the cathode active material may further include lithium-metal oxide particles having a compressive fracture strength of less than 1,500 MPa. For example, the cathode active material may be a mixture of lithium-metal oxide particles having a compressive fracture strength of 1,500 MPa or more and having a single particle form with lithium-metal oxide particles having a compressive fracture strength of 1,500 MPa or less.

In some embodiments, the cathode active material may be substantially composed of the lithium-metal oxide particles.

According to some embodiments, a method for preparing the lithium-metal oxide particles may be provided.

According to some embodiments, an active material metal source may be prepared. The active material metal source may include a nickel source and a cobalt source. For example, a manganese source may be additionally used together.

Examples of the nickel source may include nickel sulfate (NiSO₄), nickel hydroxide (Ni(OH)₂), nickel nitrate (Ni(NO₃)₂), nickel acetate (Ni(CH₃CO₂)₂), and hydrates thereof. Examples of the manganese source may include manganese sulfate (MnSO₄), manganese hydroxide (Mn(OH)₂), manganese nitrate (Mn(NO₃)₂), manganese acetate (Mn(CH₃CO₂)₂), and hydrates thereof. Examples of the cobalt source may include cobalt sulfate (CoSO₄), cobalt hydroxide (Co(OH)₂), cobalt nitrate (Co(NO₃)₂), cobalt carbonate (CoCO₃), and hydrates thereof.

For example, nickel sulfate, manganese sulfate and cobalt sulfate may be used as the nickel source, manganese source and cobalt source, respectively.

According to some embodiments, the above-described active material metal salts may be mixed and reacted, for example, through a co-precipitation method, to obtain an active material precursor. For example, the active material precursor may be prepared in the form of nickel-manganese-cobalt hydroxide.

A precipitant and/or a chelating agent may be used to promote the co-precipitation reaction. The precipitant may include an alkaline compound such as sodium hydroxide (NaOH), sodium carbonate (Na₂CO₃), or the like. The chelating agent may include, for example, ammonium hydroxide, ammonium carbonate, or the like.

The active material precursor may be mixed with a lithium source and reacted through heat treatment (calcination) to prepare lithium-metal oxide particles. For example, the heat treatment temperature may be controlled within the range of about 800 °C to 1100 °C, and the heat treatment time may be controlled within the range of about 3 hours to 50 hours. The heat treatment (calcination) may be performed in an oxygen atmosphere.

The lithium source may include, for example, lithium carbonate (Li₂CO₃), lithium nitrate (LiNO₃), lithium acetate (CH₃COOLi), lithium oxide (Li₂O), lithium hydroxide (LiOH), and the like. These may be used alone or in a combination of two or more thereof. For example, lithium hydroxide and/or lithium carbonate may be used as the lithium source.

In some embodiments, a doping metal source may be mixed with the active material precursor and the lithium source to prepare lithium-metal oxide particles. The doping metal source may include a compound such as an oxide or a hydroxide of the doping metal.

The doping metal source may be mixed with the active material precursor and the lithium source so that the content of the doping metal included in the lithium-metal oxide particles is 3,000 ppm or less.

According to some embodiments, impurities such as unreacted lithium sources like LiOH and Li₂CO₃ may remain on the surface of the lithium-metal oxide particles. The impurities may be removed by washing with an aqueous solvent or an organic solvent.

In some embodiments, a post-calcination process may be further performed after the washing process. The post-calcination process may be performed at a temperature of about 250°C to 500°C in an oxygen atmosphere, for example.

In some embodiments, the cathode active material layer may further include at least one of a binder, a conductive material, a solid electrolyte, or the like.

The binder may include, for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC).

For example, a PVDF-based binder may be used as a binder for forming the cathode. In this case, an amount of the binder for forming the cathode active material layer may be reduced and an amount of the cathode active material may be relatively increased. Thereby, the output and capacity of the secondary battery may be improved.

The conductive material may be included to facilitate electron transfer between the active material particles. For example, the conductive material may include carbon-based conductive materials such as graphite, carbon black, graphene, or carbon nanotubes and/or metal-based conductive materials, including perovskite materials, such as tin, tin oxide, titanium oxide, LaSrCoO₃, and LaSrMnO₃, etc.

The solid electrolyte is not particularly limited. In some embodiments, the solid electrolyte may be a sulfide-based solid electrolyte. The solid electrolyte included in the cathode active material layer may be the same as the sulfide-based solid electrolyte included in the solid electrolyte layer 30 described below. Accordingly, the solid electrolyte may suppress an increase in resistance that occurs because electrolyte solution is difficult to penetrate into the interior of the cathode active material particles.

In some embodiments, the cathode current collector may include stainless steel, nickel, aluminum, titanium, or an alloy thereof. The cathode current collector may also include aluminum or stainless steel having a surface treated with carbon, nickel, titanium, or silver. The cathode current collector may have a thickness of, for example, 10 µm to 50 µm, but it is not limited thereto.

In some embodiments, a slurry may be prepared by mixing the cathode active material with a binder, a conductive material, and/or a dispersant in a solvent, followed by stirring the same. The prepared slurry may be applied to the cathode current collector, then dried and pressed to prepare the cathode 10.

The anode 20 may include a lithium metal layer. For example, the anode 20 may include a plate-shaped electrode current collector or electrode support and a lithium metal layer disposed on at least one surface thereof.

The lithium metal layer may include a structure in which lithium atoms are connected by metal bonds, and may include some metal elements other than lithium and/or inevitable impurities.

The lithium metal layer may supply lithium ions during charging of the lithium secondary battery, and during discharging, lithium ions stored in the cathode may be reduced and deposited on the surface of the lithium metal layer. Unlike silicon and/or carbon-based anode active materials that intercalate/deintercalate lithium ions, lithium metal may be a lithium source itself, thereby increasing the energy density of the battery while increasing the capacity of the battery.

When lithium ions are non-uniformly deposited on the surface of the lithium metal layer, it may lead to localized expansion, causing an overall increase in the volume of the battery and a subsequent rise in the internal pressure within the sealed system. However, a cathode comprising high-strength lithium-metal oxide particles can exhibit enhanced mechanical durability, thereby mitigating performance degradation associated with increased internal resistance. This mechanical robustness helps maintain structural integrity during repeated charge-discharge cycles, reducing the likelihood of particle fracture or electrode deformation that could otherwise exacerbate non-uniform lithium plating.

According to some embodiments, the anode may be composed of a lithium metal layer. For example, the anode may be composed of only lithium, and may not include an alloy including lithium and metals other than lithium. For example, the anode may be a lithium foil.

In some embodiments, the anode 20 may have a thickness of about 10 µm to 100 µm, but it is not limited thereto.

The solid electrolyte layer 30 may be interposed between the cathode 10 and the anode 20, thereby performing both the role of a physical separator and the role of an electrolyte which is a migration pathway for lithium ions.

The solid electrolyte layer 30 may include a sulfide-based solid electrolyte. The sulfide-based solid electrolyte may be an LPS-based solid electrolyte including Li, P and S, an LGPS-based solid electrolyte including Li, P, Ge and S, or an LSiPSCl-based solid electrolyte including Li, Si, P, S and Cl.

In some embodiments, the sulfide-based solid electrolyte may include a compound represented by Formula 2 below.

Formula 2 Li_{c}Y_{d}PₑS_{f}Z_{g}

In Formula 2, Y includes at least one of B, Al, Ga, In, Si, Ge, Sn, Pb, As, Sb, Bi, Ti, V, Cr, Mn, Fe, Co, Ni, Cu, Y, Zr, Nb, Mo, Tc, Ru, Rh, Pd, Ag, Hf, Ta and W, and Z includes at least one of F, Cl, Br, I and O, and c, d, e, f and g satisfy 0 < c < 12, 0≤d≤6, 0≤e≤6, 0≤f≤12, 0≤g≤9.

According to some embodiments, the sulfide-based solid electrolyte may include two or more compounds represented by Formula 2 above.

According to some embodiments, the sulfide-based solid electrolyte may include at least one selected from the group consisting of Li₂S-P₂S₅, Li₂S-P₂S₅-LiCl, Li₂S-P₂S₅-LiBr, Li₂S-P₂S₅-LiCl-LiBr, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₃-ZₘSₙ (m and n are positive numbers, Z is Ge, Zn or Ga), Li₂S-GeS₂, Li₂S-SiS₂-Li₃PO₄, Li₂S-SiS₂-LiₚMO_{q}, (p and q are positive numbers, M is P, Si, Ge, B, Al, Ga or In) and combinations thereof.

In some embodiments, the content of the sulfide-based solid electrolyte may be 5 wt% or more, 10 wt% or more, 20 wt% or more, 30 wt% or more, 40 wt% or more, 50 wt% or more, 60 wt% or more, 70 wt% or more, 80 wt% or more, or 90 wt% or more based on the total weight of the solid electrolyte layer 30. For example, the solid electrolyte layer 30 may be substantially composed of the sulfide-based solid electrolyte.

In some embodiments, the solid electrolyte layer 30 may further include a polymer in addition to the sulfide-based solid electrolyte. The polymer may function as a binder.

In some embodiments, the solid electrolyte layer 30 may be formed as a sulfide-based solid electrolyte pellet or sheet. For example, a composition including the sulfide-based solid electrolyte and a binder may be applied to a release film, then dried and roll-pressed to form a solid electrolyte sheet. Alternatively, the sulfide-based solid electrolyte may be press-molded to form a solid electrolyte pellet.

According to some embodiments, the solid electrolyte layer may have a thickness of 10 µm to 100 µm.

According to some embodiments, an electrode cell may include an electrode structure including the cathode, the anode, and the solid electrolyte layer. A plurality of the electrode cells may be stacked to form an electrode assembly. For example, the electrode assembly may be formed by any well-known method such as winding, laminating, folding, and the like. This assembly approach allows for flexibility in cell design and may enhance energy density, mechanical stability, and manufacturing efficiency depending on the intended application.

The electrode assembly may be accommodated in a case to define a lithium secondary battery. The lithium secondary battery may be manufactured in a cylindrical, square, pouch-shaped, or coin-shaped configuration using a can, for example.

Electrode tabs (a cathode tab and an anode tab) may protrude from the cathode current collector and the anode current collector, respectively, and may extend to one side of a case of the secondary battery. The electrode tabs may be fused together with the one side of the case to form electrode leads (a cathode lead and an anode lead) that extend or are exposed to the outside of the case.

### Example 1

### Preparation of cathode active material

Nickel(II) sulfate (NiSO₄), cobalt(II) sulfate (CoSO₄), and manganese(II) sulfate (MnSO₄) were mixed in a ratio of 88:9:3 using distilled water from which dissolved oxygen had been removed by bubbling with nitrogen gas (N₂) for 24 hours. The mixed solution was then introduced into a reactor maintained at 50 °C, followed by the addition of sodium hydroxide (NaOH) as a precipitating agent and ammonia solution as a chelating agent were added thereto, followed by performing co-precipitation for 48 hours to obtain Ni_{0.88}Co_{0.09}Mn_{0.03}(OH)₂ as a transition metal precursor. The obtained precursor was dried at 80°C for 12 hours and then further dried at 110°C for 12 hours.

Lithium hydroxide and the transition metal precursor were added to a dry high-speed mixer in a ratio of 1.01:1 to 1.025:1, and uniformly mixed for 5 minutes. The mixture was placed in a calcination furnace, and heated to 830°C to 850°C at a heating rate of 2°C/min, and maintained at 830°C to 850°C for 10 hours. Oxygen was continuously supplied at a flow rate of 10 mL/min during the heating and holding. After completion of the calcination, the mixture was naturally cooled to room temperature, then pulverized and classified to obtain lithium-metal oxide particles having a composition of LiNi_{0.88}Co_{0.09}Mn_{0.03}O₂ (D₅₀: 5 µm).

### Manufacture of lithium secondary battery

A secondary battery was manufactured using the cathode active material prepared as described above. Specifically, the lithium-metal oxide particles, sulfide-based solid electrolyte (Li₆PS₅Cl), and conductive material (Super P) were mixed in a mass ratio of 68:29:3 to prepare a composite cathode.

A solid electrolyte (Li₆PS₅Cl) was placed in a SUS circular mold having a diameter of Φ13 at a density of 10 mg/cm², followed by uniaxial pressing at 80 MPa and cold isostatic press (CIP) molding, to fabricate a solid electrolyte pellet. The cathode electrode was placed at a density of 10 mg/cm² on one side of the solid electrolyte pellet, pressed at 350 MPa to form a pellet. Then, Li foil was placed on the other side and pressed at 50 MPa to manufacture an electrode cell having a structure including the cathode composite, the solid electrolyte and the Li anode. The electrode cell was assembled into a pressed cell outer case having a diameter of Φ13.05.

### Example 2

A cathode active material and a lithium secondary battery were manufactured in the same manner as in Example 1, except that NiSO₄, CoSO₄, and MnSO₄ were mixed in a ratio of 80:10:10 during preparation of the cathode active material to prepare lithium-metal oxide particles having a combination of LiNi_{0.80}Co_{0.10}Mn_{0.10}O₂(D₅₀: 5 µm).

### Example 3

A cathode active material and a lithium secondary battery were manufactured in the same manner as in Example 1, except that the calcination temperature was changed to 900°C to 930°C during preparation of the cathode active material.

### Example 4

A cathode active material and a lithium secondary battery were manufactured in the same manner as in Example 1, except that the calcination time was changed to 15 hours during preparation of the cathode active material to obtain lithium-metal oxide particles having a combination of LiNi_{0.88}Co_{0.09}Mn_{0.03}O₂(D₅₀: 7 µm).

### Comparative Example 1

A cathode active material and a lithium secondary battery were manufactured in the same manner as in Example 1, except that the calcination temperature was changed from 730°C to 750°C during preparation of the cathode active material.

### Comparative Example 2

A cathode active material and a lithium secondary battery were manufactured in the same manner as in Example 1, except that the calcination temperature was changed from 760°C to 820°C during preparation of the cathode active material.

The compressive fracture strengths of the lithium-metal oxide particles of the examples and comparative examples were measured, and the results are shown in Table 1 below. Specifically, a load was applied to the particles using a powder resistance measuring device (device name: PI88 SEM Picoindenter, manufacturer: HYSITRON), and a stress-strain curve was plotted to measure the maximum compressive stress that could be applied without causing particle fracture. More specifically, the lithium-metal oxide particles of the examples and comparative examples were diluted with ethanol and redispersed onto a silicon wafer. Then, 18 to 20 particles were each compressed with the powder resistance measuring device and removed at constant displacement rates of 10 nm/s and 100 nm/s, respectively, while collecting data at 400 Hz. The collected data were corrected by taking into account the spring stiffness, nanoindenter frame compliance, silicon substrate, and the compliance of the diamond tip.

In addition, SEM images of the lithium-metal oxide particles of the examples and comparative examples were taken to determine the particle shapes, and the shape of each particle is shown in Table 1 below.

In addition, the types of solid electrolytes and anodes used in the examples and comparative examples are also shown in Table 1.

**[TABLE 1]**

| | Lithium-metal oxide particles | | Solid electrolyte | Anode |
|---|---|---|---|---|
| | Compressive fracture strength (MPa) | Particle form | | |
| Example 1 | 1600 | Single particle | Li₆PS₅Cl | Li foil |
| Example 2 | 1670 | Single particle | Li₆PS₅Cl | Li foil |
| Example 3 | 1700 | Single particle | Li₆PS₅Cl | Li foil |
| Example 4 | 1580 | Single particle | Li₆PS₅Cl | Li foil |
| Comparative Example 1 | 300 | Secondary particle | Li₆PS₅Cl | Li foil |
| Comparative Example 2 | 1400 | Single particle | Li₆PS₅Cl | Li foil |

### Experimental Example

The properties of the lithium secondary batteries according to the examples and comparative examples were measured or evaluated by the following method, and the results are shown in Table 2.

### (1) Evaluation of cycle life characteristics: measurement of capacity retention rate

The lithium secondary batteries according to the examples and comparative examples were charged (CC/CV 0.1C 4.25V 0.05C CUT-OFF) and discharged (CC 0.1C 2.5V CUT-OFF) once, and the initial discharge capacity was measured. The charging and discharging process was defined as one cycle, and was repeated for 99 cycles. Then, the discharge capacity at the 100th cycle was measured. More specifically, the lithium secondary batteries, as prepared according to the example and comparative example formulations, were subjected to electrochemical cycling under defined conditions. Initially, each battery cell was charged using a constant current/constant voltage (CC/CV) protocol. Specifically, charging was carried out at a constant current of 0.1C until the cell voltage reached 4.25 V, after which the voltage was held constant at 4.25 V while the current declined. The charging process was terminated (cut-off) when the current decreased to 0.05C. Following charging, the batteries were discharged at a constant current of 0.1C until the voltage reached a lower cut-off of 2.5 V. This complete charge-discharge process was defined as a single cycle, during which the initial discharge capacity was recorded. The cells were then subjected to repeated cycling for 99 additional cycles under the same charge-discharge conditions. Upon completion of the 100th cycle, the discharge capacity at the final cycle was measured to assess the capacity retention and long-term cycling performance of each battery type.

The ratio of the discharge capacity at the 100th cycle to the initial discharge capacity was calculated as a percentage to evaluate the cycle life characteristics.

### (2) Confirmation of occurrence of cathode active material crack after a specific cycle

For lithium secondary batteries, charging (CC/CV 0.1C 4.25V 0.05C CUT-OFF) and discharging (CC 0.1C 2.5V CUT-OFF) were defined as one cycle, and 10 cycles were performed. Then, the cathode was separated from the batteries of the examples and comparative examples. The cathode active material layer surface of the cathode was observed using a scanning electron microscope (SEM) to confirm whether cracks occurred in 10 random lithium-metal oxide particles, and the results were evaluated according to the following criteria.
O: No lithium-metal oxide particles with surface cracks
X: One or more lithium-metal oxide particles with surface cracks

**[TABLE 2]**

| | Cycle life characteristic evaluation (%) | Crack occurrence evaluation |
|---|---|---|
| Example 1 | 81.2% | O |
| Example 2 | 84.0% | O |
| Example 3 | 80.8% | O |
| Example 4 | 80.5% | O |
| Comparative Example 1 | Overcharge occurs | X |
| Comparative Example 2 | 65.7% | X |

Referring to Table 2 above, the lithium secondary batteries of the examples exhibited improved cycle life characteristics because they included lithium-metal oxide particles having a compressive fracture strength of 1,500 MPa or more as cathode active materials, and the occurrence of cracks was suppressed even after repeated charge and discharge cycles.

The lithium-metal oxide particles included in the battery of Comparative Example 1 did not have a single particle structure and had very low strength, such that the cycle life characteristics of the battery were significantly reduced. This was due to cracks occurring inside the cathode as the volume of the lithium electrode increased and high pressure was applied to the cathode.

The lithium-metal oxide particles included in the battery of Comparative Example 2 also had a compressive fracture strength of less than 1,500 MPa, which resulted in the cycle life characteristics being lower than those of the examples.

The contents described above are merely examples of applying the principles of the present disclosure, and other configurations may be further included without departing from the scope of the present disclosure.

The invention is also defined by the following aspects.

Aspect 1. A lithium secondary battery comprising:
a cathode which comprises lithium-metal oxide particles having a compressive fracture strength of 1,500 MPa or more and having a single particle form;
an anode disposed opposite to the cathode and comprising a metal layer comprising lithium; and
a solid electrolyte layer interposed between the cathode and the anode and comprising a sulfide-based solid electrolyte.

Aspect 2. The lithium secondary battery according to aspect 1, wherein the compressive fracture strength of the lithium-metal oxide particles is 1,600 MPa or more and 3,000 MPa or less.

Aspect 3. The lithium secondary battery according to aspect 1 or 2, wherein the lithium-metal oxide particles comprise nickel, cobalt and manganese.

Aspect 4. The lithium secondary battery according to aspect 3, wherein a content of nickel based on a total number of moles of elements excluding lithium and oxygen in the lithium-metal oxide particles is 60 mol% or more and less than 100 mol%.

Aspect 5. The lithium secondary battery according to any one of aspect 1 to 4, wherein the lithium-metal oxide particles include a layered structure represented by Formula 1 below:

Formula 1 LiₓNiₐM1_{b1}M2_{b2}O_{2+y}

wherein in Formula 1, M1 comprises at least one of Co, Mn and Al, and M2 comprises at least one of Na, Mg, Ca, Y, Ti, Hf, V, Nb, Ta, Cr, Mo, W, Fe, Cu, Ag, Zn, B, Ga, C, Si, Sn, Sr, Ba, Ra, P and Zr, and
x, a, b1, b2 and z satisfy 0.9≤x≤1.2, 0.6≤a<1, 0<b1+b2≤0.4, -0.5≤y≤0.1).

Aspect 6. The lithium secondary battery according to any one of aspect 1 to 5, wherein the lithium-metal oxide particles have a median particle diameter (D50) of 1 µm to 10 µm.

Aspect 7. The lithium secondary battery according to any one of aspect 1 to 6, wherein the anode is composed of a metal layer comprising lithium.

Aspect 8. The lithium secondary battery according to any one of aspect 1 to 7, wherein the sulfide-based solid electrolyte comprises a compound represented by Formula 2 below:

Formula 2 Li_{c}Y_{d}PₑS_{f}Z_{g}

wherein in Formula 2, Y comprises at least one of B, Al, Ga, In, Si, Ge, Sn, Pb, As, Sb, Bi, Ti, V, Cr, Mn, Fe, Co, Ni, Cu, Y, Zr, Nb, Mo, Tc, Ru, Rh, Pd, Ag, Hf, Ta and W, and Z comprises at least one of F, Cl, Br, I and O, and
c, d, e, f and g satisfy 0 < c < 12, 0≤d≤6, 0≤e≤6, 0≤f≤12, 0≤g≤9.

Aspect 9. The lithium secondary battery according to any one of aspect 1 to 8, wherein the sulfide-based solid electrolyte comprises at least one selected from the group consisting of Li₂S-P₂S₅, Li₂S-P₂S₅-LiCl, Li₂S-P₂S₅-LiBr, Li₂S-P₂S₅-LiCl-LiBr, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ where m and n are positive numbers, and Z is Ge, Zn or Ga, Li₂S-GeS₂, Li₂S-SiS₂-Li₃PO₄, Li₂S-SiS₂-LiₚMO_{q}, where p and q are positive numbers, and M is P, Si, Ge, B, Al, Ga or In, and combinations thereof.

Aspect 10. The lithium secondary battery according to any one of aspect 1 to 9, wherein the solid electrolyte layer has a thickness of 10 µm to 100 µm.

Aspect 11. The lithium secondary battery according to any one of aspect 1 to 10, wherein the cathode comprises a cathode current collector and a cathode active material layer disposed on at least one surface of the cathode current collector, and
wherein the cathode active material layer comprises the lithium-metal oxide particles and the sulfide-based solid electrolyte.

Aspect 12. The lithium secondary battery according to any one of aspect 1 to 11, comprising a plurality of the electrode structures, wherein each electrode structure is defined by the cathode, the anode and the solid electrolyte layer.

Aspect 13. An electrode assembly for a secondary battery, electrode assembly comprising:
a cathode, an anode, and a solid electrolyte layer separating the cathode and anode,
wherein the cathode comprises lithium-metal oxide particles having a compressive fracture strength of 1,500 MPa or more and having a single particle form;
wherein the anode comprises a lithium metal layer; and
wherein the solid electrolyte layer comprises a sulfide-based solid electrolyte.

Aspect 14. The electrode assembly of aspect 13, wherein the lithium-metal oxide particles have a compressive fracture strength of 1,600 MPa or more and 3,000 MPa or less as measured by applying a load to individual lithium-metal oxide particles using a powder resistance measuring device, and determining the maximum compressive stress prior to particle fracture based on a stress-strain curve obtained at a displacement rate of 10 nm/s or 100 nm/s, wherein the data is corrected by considering the spring stiffness, frame compliance, substrate compliance, and tip compliance.

Aspect 15. The electrode assembly of aspect 13 or 14, wherein the lithium-metal oxide particles include a layered structure represented by Formula 1 below:

Formula 1 LiₓNiₐM1_{b1}M2_{b2}O_{2+y}

wherein in Formula 1, M1 comprises at least one of Co, Mn and Al, and M2 comprises at least one of Na, Mg, Ca, Y, Ti, Hf, V, Nb, Ta, Cr, Mo, W, Fe, Cu, Ag, Zn, B, Ga, C, Si, Sn, Sr, Ba, Ra, P and Zr, and
x, a, b1, b2 and z satisfy 0.9≤x≤1.2, 0.6≤a<1, 0<b1+b2≤0.4, -0.5≤y≤0.1.
wherein the sulfide-based solid electrolyte comprises a compound represented by Formula 2 below:

Formula 2 Li_{c}Y_{d}PₑS_{f}Z_{g}

(in Formula 2, Y comprises at least one of B, Al, Ga, In, Si, Ge, Sn, Pb, As, Sb, Bi, Ti, V, Cr, Mn, Fe, Co, Ni, Cu, Y, Zr, Nb, Mo, Tc, Ru, Rh, Pd, Ag, Hf, Ta and W, and Z comprises at least one of F, Cl, Br, I and O, and
c, d, e, f and g satisfy 0 < c < 12, 0≤d≤6, 0≤e≤6, 0≤f≤12, 0≤g≤9), and
wherein the sulfide-based solid electrolyte comprises at least one selected from the group consisting of Li₂S-P₂S₅, Li₂S-P₂S₅-LiCl, Li₂S-P₂S₅-LiBr, Li₂S-P₂S₅-LiCl-LiBr, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ where m and n are positive numbers, and Z is Ge, Zn or Ga, Li₂S-GeS₂, Li₂S-SiS₂-Li₃PO₄, Li₂S-SiS₂-LiₚMO_{q} where p and q are positive numbers, and M is P, Si, Ge, B, Al, Ga or In, and combinations thereof.

### Description of Reference Numerals

10: Cathode
20: Anode
30: Solid electrolyte layer
100: Lithium secondary battery

## Claims

1. A lithium secondary battery comprising:
a cathode which comprises lithium-metal oxide particles having a compressive fracture strength of 1,500 MPa or more and having a single particle form;
an anode disposed opposite to the cathode and comprising a metal layer comprising lithium; and
a solid electrolyte layer interposed between the cathode and the anode and comprising a sulfide-based solid electrolyte.

2. The lithium secondary battery according to claim 1, wherein the compressive fracture strength of the lithium-metal oxide particles is 1,600 MPa or more and 3,000 MPa or less.

3. The lithium secondary battery according to claim 1 or 2, wherein the lithium-metal oxide particles comprise nickel, cobalt and manganese.

4. The lithium secondary battery according to claim 3, wherein a content of nickel based on a total number of moles of elements excluding lithium and oxygen in the lithium-metal oxide particles is 60 mol% or more and less than 100 mol%.

5. The lithium secondary battery according to any one of claims 1 to 4, wherein the lithium-metal oxide particles include a layered structure represented by Formula 1 below:
Formula 1 LiₓNiₐM1_{b1}M2_{b2}O_{2+y}
wherein in Formula 1, M1 comprises at least one of Co, Mn and Al, and M2 comprises at least one of Na, Mg, Ca, Y, Ti, Hf, V, Nb, Ta, Cr, Mo, W, Fe, Cu, Ag, Zn, B, Ga, C, Si, Sn, Sr, Ba, Ra, P and Zr, and
x, a, b1, b2 and z satisfy 0.9≤x≤1.2, 0.6≤a<1, 0<b1+b2≤0.4, -0.5≤y≤0.1).

6. The lithium secondary battery according to any one of claims 1 to 5, wherein the lithium-metal oxide particles have a median particle diameter (D50) of 1 µm to 10 µm.

7. The lithium secondary battery according to any one of claims 1 to 6, wherein the anode is composed of a metal layer comprising lithium.

8. The lithium secondary battery according to any one of claims 1 to 7, wherein the sulfide-based solid electrolyte comprises a compound represented by Formula 2 below:
Formula 2 Li_{c}Y_{d}PₑS_{f}Z_{g}
wherein in Formula 2, Y comprises at least one of B, Al, Ga, In, Si, Ge, Sn, Pb, As, Sb, Bi, Ti, V, Cr, Mn, Fe, Co, Ni, Cu, Y, Zr, Nb, Mo, Tc, Ru, Rh, Pd, Ag, Hf, Ta and W, and Z comprises at least one of F, Cl, Br, I and O, and
c, d, e, f and g satisfy 0 < c < 12, 0≤d≤6, 0≤e≤6, 0≤f≤12, 0≤g≤9.

9. The lithium secondary battery according to any one of claims 1 to 8, wherein the sulfide-based solid electrolyte comprises at least one selected from the group consisting of Li₂S-P₂S₅, Li₂S-P₂S₅-LiCl, Li₂S-P₂S₅-LiBr, Li₂S-P₂S₅-LiCl-LiBr, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ where m and n are positive numbers, and Z is Ge, Zn or Ga, Li₂S-GeS₂, Li₂S-SiS₂-Li₃PO₄, Li₂S-SiS₂-LiₚMO_{q}, where p and q are positive numbers, and M is P, Si, Ge, B, Al, Ga or In, and combinations thereof.

10. The lithium secondary battery according to any one of claims 1 to 9, wherein the solid electrolyte layer has a thickness of 10 µm to 100 µm.

11. The lithium secondary battery according to any one of claims 1 to 10, wherein the cathode comprises a cathode current collector and a cathode active material layer disposed on at least one surface of the cathode current collector, and
wherein the cathode active material layer comprises the lithium-metal oxide particles and the sulfide-based solid electrolyte.

12. The lithium secondary battery according to any one of claims 1 to 11, comprising a plurality of the electrode structures, wherein each electrode structure is defined by the cathode, the anode and the solid electrolyte layer.

13. An electrode assembly for a secondary battery, electrode assembly comprising:
a cathode, an anode, and a solid electrolyte layer separating the cathode and anode,
wherein the cathode comprises lithium-metal oxide particles having a compressive fracture strength of 1,500 MPa or more and having a single particle form;
wherein the anode comprises a lithium metal layer; and
wherein the solid electrolyte layer comprises a sulfide-based solid electrolyte.

14. The electrode assembly of claim 13, wherein the lithium-metal oxide particles have a compressive fracture strength of 1,600 MPa or more and 3,000 MPa or less as measured by applying a load to individual lithium-metal oxide particles using a powder resistance measuring device, and determining the maximum compressive stress prior to particle fracture based on a stress-strain curve obtained at a displacement rate of 10 nm/s or 100 nm/s, wherein the data is corrected by considering the spring stiffness, frame compliance, substrate compliance, and tip compliance.

15. The electrode assembly of claim 13 or 14, wherein the lithium-metal oxide particles include a layered structure represented by Formula 1 below:
Formula 1 Li_{xN}iₐM1_{b1}M2_{b2}O_{2+y}
wherein in Formula 1, M1 comprises at least one of Co, Mn and Al, and M2 comprises at least one of Na, Mg, Ca, Y, Ti, Hf, V, Nb, Ta, Cr, Mo, W, Fe, Cu, Ag, Zn, B, Ga, C, Si, Sn, Sr, Ba, Ra, P and Zr, and
x, a, b1, b2 and z satisfy 0.9≤x≤1.2, 0.6≤a<1, 0<b1+b2≤0.4, -0.5≤y≤0.1.
wherein the sulfide-based solid electrolyte comprises a compound represented by Formula 2 below:
Formula 2 Li_{c}Y_{d}PₑS_{f}Z_{g}
(in Formula 2, Y comprises at least one of B, Al, Ga, In, Si, Ge, Sn, Pb, As, Sb, Bi, Ti, V, Cr, Mn, Fe, Co, Ni, Cu, Y, Zr, Nb, Mo, Tc, Ru, Rh, Pd, Ag, Hf, Ta and W, and Z comprises at least one of F, Cl, Br, I and O, and
c, d, e, f and g satisfy 0 < c < 12, 0≤d≤6, 0≤e≤6, 0≤f≤12, 0≤g≤9), and
wherein the sulfide-based solid electrolyte comprises at least one selected from the group consisting of Li₂S-P₂S₅, Li₂S-P₂S₅-LiCl, Li₂S-P₂S₅-LiBr, Li₂S-P₂S₅-LiCl-LiBr, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ where m and n are positive numbers, and Z is Ge, Zn or Ga, Li₂S-GeS₂, Li₂S-SiS₂-Li₃PO₄, Li₂S-SiS₂-LiₚMO_{q} where p and q are positive numbers, and M is P, Si, Ge, B, Al, Ga or In, and combinations thereof.
